(19) **Europäisches Patentamt** / **European Patent Office** / **Office européen des brevets**

(11) **EP 4 692 572 A1**

(12) **EUROPEAN PATENT APPLICATION**

(43) Date of publication:
**11.02.2026 Bulletin 2026/07**

(21) Application number: **24192822.5**

(22) Date of filing: **05.08.2024**

(51) International Patent Classification (IPC):
*F16B 13/06* $^{(2006.01)}$

(52) Cooperative Patent Classification (CPC):
**F16B 13/065**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Hilti Aktiengesellschaft**
**9494 Schaan (LI)**

(72) Inventors:
• **Winkler, Marcel**
**6800 Feldkirch (AT)**

• **Spampatti, Matteo**
**9470 Buchs (CH)**
• **Marder, Johannes Alfred**
**6800 Feldkirch (AT)**
• **Schaeffer, Marc**
**8852 Altendorf (CH)**

(74) Representative: **Hilti Aktiengesellschaft**
**Corporate Intellectual Property**
**Feldkircherstrasse 100**
**Postfach 333**
**9494 Schaan (LI)**

(54) **EXPANSION ANCHOR WITH SHEAR SUPPORT SLEEVE**

(57)   Expansion anchor having an anchor bolt having a threaded zone for introducing tensile load into the anchor bolt, and an expansion sleeve surrounding the anchor bolt, wherein the anchor bolt has an expansion body located in a front region of the anchor bolt, wherein the expansion body has a converging zone for expanding the expansion sleeve, wherein the anchor bolt further has a flange that provides an abutment for the expansion sleeve, wherein the flange is arranged between the expansion body and the threaded zone, wherein the anchor bolt further has a neck that is arranged between the expansion body and the flange, and which adjoins both the expansion body and the flange, wherein the expansion sleeve surrounds the neck of the anchor bolt, characterized in that the following holds for the cross-sectional area At of the threaded zone and for the cross-sectional area $A_n$ of the neck: $(At / An) \leq 1.3$.

Fig. 2

EP 4 692 572 A1

## Description

The invention relates to an expansion anchor according to the preamble of claim 1.

An expansion anchor of this type comprises an anchor bolt having a threaded zone for introducing tensile load into the anchor bolt, and an expansion sleeve surrounding the anchor bolt, wherein the anchor bolt has an expansion body located in a front region of the anchor bolt, wherein the expansion body has a converging zone for expanding the expansion sleeve, wherein the anchor bolt further has a flange that provides an abutment for the expansion sleeve, wherein the flange is arranged between the expansion body and the threaded zone, wherein the anchor bolt further has a neck that is arranged between the expansion body and the flange, and which adjoins both the expansion body and the flange, wherein the expansion sleeve surrounds the neck of the anchor bolt.

DE9410844 U1 discloses an expansion anchor which is additionally shear-supported by a flanged sleeve. The expansion anchor is installed in a stepped bore, wherein the flanged sleeve is arranged in the larger-diameter zone of the stepped bore.

It is an object of the invention to provide an expansion anchor which provides particularly good performance at low manufacturing and/or installation effort.

This object is achieved by an expansion anchor according to claim 1. Dependent claims refer to preferred embodiments of the invention.

According to the invention, the following holds for the cross-sectional area At of the threaded zone and for the cross-sectional area $A_n$ of the neck:

$$(A_t \, / \, A_n) \leq 1.3$$

preferably

$$1.0 \leq (A_t \, / \, A_n) \leq 1.3.$$

Thus, the cross-sectional area $A_t$ of the threaded zone is specified with a value smaller or equal than 130% of the cross-sectional area $A_n$ of the neck, preferably with a value within 100-130% of the cross-sectional area $A_n$ of the neck.

Alternatively or additionally, it is proposed that the following holds for the major thread diameter $d_{tm}$ of the threaded zone and the diameter $d_{ne}$ of a circular cylinder that envelops the neck:

$$(d_{tm} \, / \, d_{ne}) \leq 1.2$$

preferably

$$1.0 \leq (d_{tm} \, / \, d_{ne}) \leq 1.2$$

Thus, the major thread diameter $d_{tm}$ of the threaded zone is specified with a value smaller or equal than 120% of the diameter $d_{ne}$ of the circular cylinder that envelops the neck, preferably with a value within 100-120 % of the diameter $d_{ne}$ of the circular cylinder that envelops the neck.

There is thus proposed a stud-type expansion anchor (i.e. an anchor provided with expansion sleeve abutment) that has a relatively small thread cross section. This is based on the finding that, in typical load situations, the minimum cross section of the anchor bolt that is required in order to bear the arising loads is often not so much limited by tensile performance, but rather by shear performance. As a consequence, if the shear load is absorbed by external means, such as a shear support sleeve, it is possible to provide the anchor bolt with relatively small cross section whilst still maintaining sufficient overall performance. Based on this finding, it is proposed to, counter-intuitively, sacrifice anchor bolt diameter, which is done in order to generate room for the shar absorbance means itself, leading to a relatively compact anchor that has nevertheless sufficient overall performance.

Throughout this document - wherever the terms "axially", "longitudinally", "radially", "cross section", and "circumferentially" are used, they should refer, in particular, to the longitudinal axis of the anchor bolt, unless indicated otherwise.

As already hinted above, the expansion anchor advantageously comprises a shear support sleeve, which surrounds the threaded zone at least in regions of the threaded zone. This shear support sleeve is intended to take up shear loads arising at the mouth of a borehole in which the anchor bolt is arranged, thereby providing relief for the anchor bolt.

Preferably, the shear support sleeve consists of metal, more preferably of steel, which can also be coated. This can provide particularly good performance at particularly low effort. Alternatively, the shear support sleeve could consist of a polymer material.

According to another preferred embodiment of the invention, the following holds for the cross-sectional area $A_f$ of the flange and for the combined cross-sectional area $A_c$ of the threaded zone and of the shear support sleeve surrounding the threaded zone, at least in some regions: $0.9 \leq (A_c \, / \, A_f) \leq 1.2$, more preferably $0.9 \leq (A_c \, / \, A_f) \leq 1.0$. According to the usual understanding in the art, the combined cross-sectional area $A_c$ of the threaded zone and of the shear support sleeve surrounding the threaded zone is considered to be the sum of both cross-sectional areas in a common cross-sectional plane. According to the described embodiment, said combined cross-sectional area $A_c$ deviates only slightly from the cross-sectional area $A_f$ of the flange (which is possible due to the relatively small cross-sectional area of the threaded zone that has been described above). Due to this small deviation, it is usually possible to install the expansion anchor within a generally cylindrical standard borehole, without the need for a stepped bore such as proposed in DE9410844 U1, potentially leading to a particularly low installation effort.

For the proposed expansion anchor, the following relations can be advantageous:

- The following may hold for the major thread diameter $d_{tm}$ of the threaded zone and the diameter $d_f$ of the flange:

$$(d_{tm} / d_f) \leq 0.9$$

Accordingly, the major thread diameter $d_{tm}$ of the threaded zone is specified with a value equal or smaller than 90% of the diameter $d_f$ of the flange.

- The following may hold for the diameter $d_{ne}$ of a circular cylinder that envelops the neck and the diameter $d_f$ of the flange:

$$(d_{ne} / d_f) \leq 0.8$$

Accordingly, the diameter $d_{ne}$ of a circular cylinder that envelops the neck is specified with a value equal or smaller than 80% of the diameter $d_f$ of the flange.

- The following may hold for the cross-sectional area $A_n$ of the neck and the cross-sectional area $A_f$ of the flange:

$$0.5 \geq (A_n / A_f) \geq 0.4$$

Accordingly, cross-sectional area $A_n$ of the neck is specified with a value within 40-50% of the cross-sectional area $A_c$ of the flange.

- The following may hold for the cross-sectional area At of the threaded zone and the cross-sectional area $A_c$ of the flange:

$$0.6 \geq (A_t / A_f) \geq 0.4$$

Accordingly, the cross-sectional area $A_t$ of the threaded zone is specified with a value within 40-60% of the cross-sectional area $A_f$ of the flange.

The invention also relates to a system comprising an expansion anchor as described here, a substrate and an attachment part, in particular a baseplate, attached to the substrate by means of the anchor.

The invention is explained in greater detail below with reference to preferred exemplary embodiments, which are depicted schematically in the accompanying drawings. Individual features of the exemplary embodiments presented below can be implemented either individually or in any combination within the scope of the present invention.

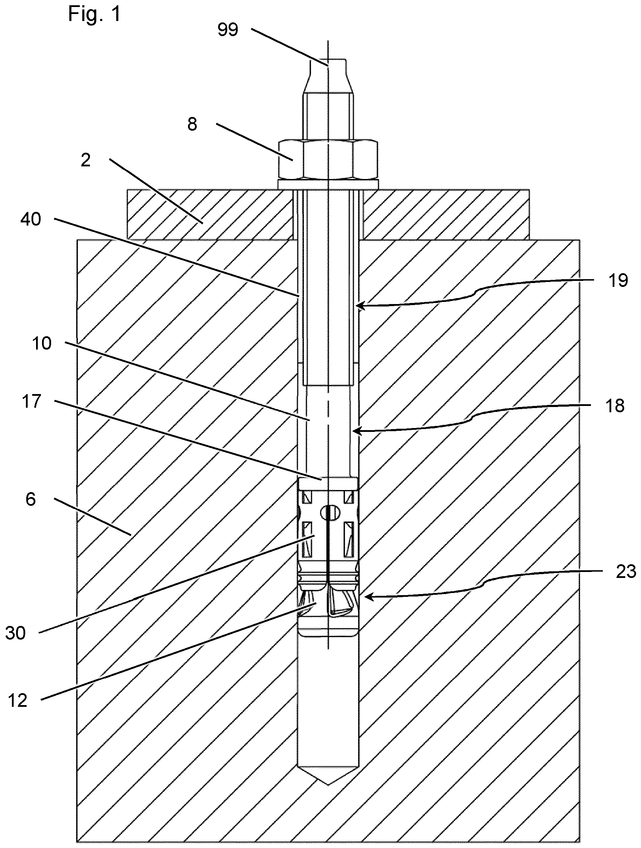

Figure 1: a partly sectional side view of an expansion anchor located in a concrete substrate;

Figure 2: a side view of the expansion anchor of figure 1, with the expansion sleeve omitted;

Figure 3: a cross-section A-A, according to figure 2, of the expansion anchor of figure 1, with the expansion sleeve omitted;

Figure 4: a cross-section B-B, according to figure 2, of the expansion anchor of figure 1, with the expansion sleeve omitted;

Figure 5: a cross-section C-C, according to figure 2, of the expansion anchor of figure 1, with the expansion sleeve omitted.

The figures illustrate an embodiment of an inventive expansion anchor. The expansion anchor comprises elongate anchor bolt 10 that defines a longitudinal axis 99, wherein the longitudinal axis extends through a leading front end of the anchor bolt 10, which is intended to be inserted first into a borehole, and through a trailing rear end of the anchor bolt. The expansion anchor furthermore comprises an expansion sleeve 30 encompassing the anchor bolt 10.

The anchor bolt 10 comprises an expansion body 12 designated for radially expanding the expansion sleeve 30. The expansion body 12 is situated proximate to the front end of the anchor bolt 10. In the current embodiment, the expansion body 12 and the remainder of the anchor bolt 10 are integrally formed, exhibiting a monolithic structure.

The expansion body 12 has a converging zone 23 designed for radially expanding the expansion sleeve 30 when the expansion body 12 is drawn into the expansion sleeve 30 in the rearward direction. For this purpose, the lateral surface of the expansion body 12 converges in the converging zone 23 towards the rear end of the anchor bolt 10. In the present example, the expansion body 12 lateral surface has generally conical envelope in the converging zone 23, with a focus of convergence on the longitudinal axis 99. However, this is merely an example, and other converging designs are also possible. In the present embodiment, recesses are provided in the expansion body 12 within the converging zone, which might interact with the expansion sleeve 30 so as to modulate the expansion path of the expansion sleeve 30.

In this example, the expansion body 12 is designed with a transition zone 22 and a tip zone 21. The transition zone 22 is located forward of and adjacent to the converging zone 23, while the tip zone 21 is located forward of and adjacent to the transition zone 22. In the transition zone 22, the rearward convergence is less pronounced compared to the converging zone 23, or it may even be zero. However, it is preferably not reversed, meaning it does not converge forward. In this specific example, there is no convergence (i.e., it is zero) in the transition zone 22. The expansion body 12 features a cylindrical lateral surface in the converging zone 23, specifically a cylinder with a circular base. In the tip zone 21, the lateral surface of the expansion body 12 converges towards the front end of the anchor.

The anchor bolt 10 has a neck 25, which is located adjacent to and rearwards of the expansion body 12. The expansion sleeve 30 at least partly surrounds this neck 25, at least before installation the anchor. At the neck 25, the cross-sectional area $A_n$ of the anchor bolt 10 can be minimal. In particular, the neck 25 has generally cylindrical shape. The cylinder base could be circular. However, in the present embodiment, a plurality of longitudinal grooves is provided within the neck 25, with the grooves extending parallel to the longitudinal axis 99. Accordingly, the cylinder base is non-circular in the present embodiment. The expansion sleeve 30 engages in the longitudinal grooves. For this purpose, the expansion sleeve has axially extending ribs, which project into the respective longitudinal grooves. This engagement forms a rotational lock, which prevents rotating of the expansion sleeve around the anchor bolt.

The anchor is of the stud type. Accordingly, the anchor bolt 10 has, adjoining the neck 25 at the rearward end of the neck 25, a shoulder 16 that faces forwards, i.e. which faces the expansion body 12, wherein the shoulder 16 provides a rearward axial abutment for the expansion sleeve 30 for advancing the expansion sleeve 30 forwards into a borehole when the anchor is inserted into the borehole. In particular, the anchor bolt comprises a flange 17 that projects from the anchor bolt 10, wherein the shoulder 16 is provided on the flange 17. Accordingly, the flange 17 provides an axial abutment for the expansion sleeve 30 for advancing the expansion sleeve 30 forwards into the borehole when the anchor is inserted into the borehole. The flange 17 has generally circular outline. It adjoins the neck 25 at the rearward end of the neck 25. Preferably, the flange 17 and the remainder of the anchor bolt 10 are integrally formed, exhibiting a monolithic structure. At the flange 17, the anchor bolt 10 has cross-sectional area $A_f$.

In a rear region of the anchor bolt 10, the anchor bolt 10 is provided with a threaded zone 19, in which the anchor bolt is provided with an outer thread. The threaded zone 19 provides a tension-introducing structure for introducing rearwardly-directed tension into the anchor bolt 10. In the threaded zone, the anchor bolt has cross-sectional area $A_t$.

Located in-between the threaded zone 19 and the flange 17, the anchor bolt 10 might have an unthreaded zone 18. The unthreaded zone 18 is generally cylindrical, in the present embodiment with cylindrical base.

The anchor bolt 10 consists of a metal material, preferably of steel, which might optionally be coated. The expansion sleeve 30 consists of a metal material, preferably of steel, which might optionally be coated.

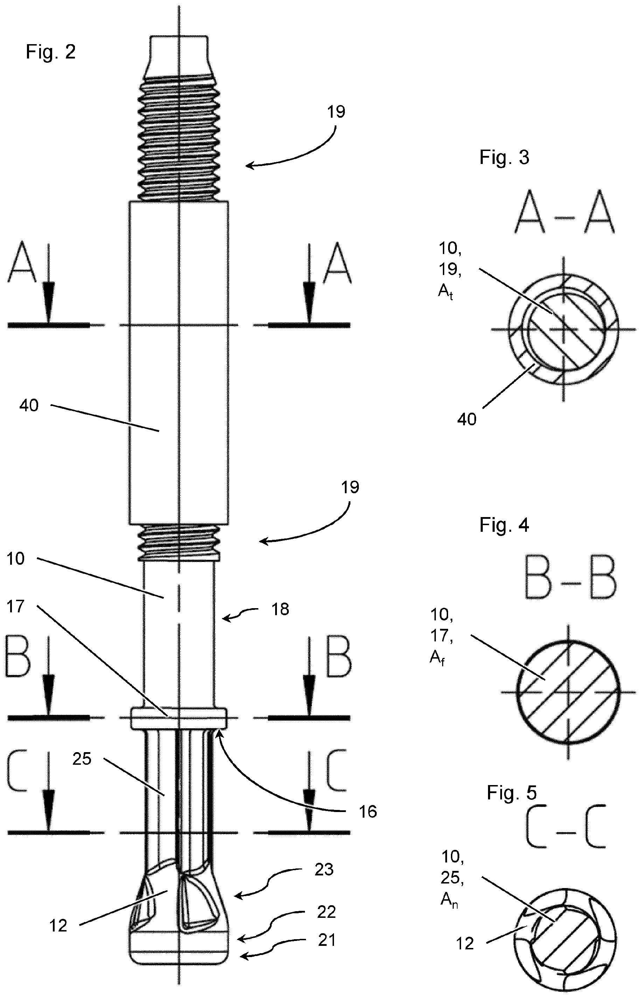

The anchor further comprises a shear support sleeve 40, which surrounds the anchor bolt 10, at least in threaded zone 19. The shear support sleeve 40 is so positioned that it bridges the mouth of the borehole when the anchor is installed in the borehole as intended. In particular, when the anchor is installed as intended, the shear support sleeve 40 extends both within an attachment part 2 attached by means of the anchor and within the substrate 6 in which the anchor is anchored. Accordingly, the shear support sleeve 40 is able to transfer shear loads, i.e. loads directed perpendicular to the longitudinal axis 99 of the anchor bolt 10, from the attachment part 2 into the substrate 6. The shear support sleeve 40 consists of a metal material, preferably of steel, which might optionally be coated. The substrate 6 is in particular a concrete substrate. The expansion sleeve 30 and the expansion body 12 are arranged within the substrate when the anchor is installed as intended. The attachment part 2 could be e.g. a metal part, e.g. the base of a column or the base of a strut. The shear support sleeve 40 and the anchor bolt 10 within the threaded zone have a combined cross-sectional area $A_c$, which would be e.g. the cross-sectional area shown in fig. 3.

When the anchor is installed, the anchor bolt 10 is introduced, front end first, into a borehole in the substrate 6. Subsequently, the expansion body 12 is drawn into the front-end region of the expansion sleeve 30. In the present embodiment, this is achieved by pulling the anchor bolt 10 together with the expansion body 12 rearwardly, in particular by tightening a nut 8 provided on the threaded zone 19 of the anchor bolt 10.

**Claims**

1. Expansion anchor having

   - an anchor bolt (10) having a threaded zone (19) for introducing tensile load into the anchor bolt (10), and
   - an expansion sleeve (30) surrounding the anchor bolt (10),
   - wherein the anchor bolt (10) has an expansion body (12) located in a front region of the anchor bolt (10), wherein the expansion body (12) has a converging zone (23) for expanding the expansion sleeve (30),
   - wherein the anchor bolt (10) further has a flange (17) that provides an abutment for the expansion sleeve (30), wherein the flange is arranged between the expansion body (12) and the threaded zone (19),
   - wherein the anchor bolt (10) further has a neck (25) that is arranged between the expansion body (12) and the flange (17), and which adjoins both the expansion body (12) and the flange (17), wherein the expansion sleeve (30) surrounds the neck (25) of the anchor bolt (10),

**characterized in that**
- the following holds for the cross-sectional area At of the threaded zone (19) and for the cross-sectional area $A_n$ of the neck (25):

$$(A_t / A_n) \leq 1.3.$$

2. Expansion anchor according to claim 1,
   **characterized in that**
   the following holds for the cross-sectional area At of the threaded zone (19) and for the cross-sectional area $A_n$ of the neck (25):

$$1.0 \leq (A_t / A_n) \leq 1.3.$$

3. Expansion anchor according to any of the proceeding claims,
   **characterized in that**
   a shear support sleeve (40) is provided, which surrounds the threaded zone (19) at least in regions of the threaded zone (19).

4. Expansion anchor according to claim 3,
   **characterized in that**
   the shear support sleeve (40) consists of steel.

5. Expansion anchor according to any of claims 3 or 4,
   **characterized in that**
   the following holds for the cross-sectional area $A_f$ of the flange (17) and for the combined cross-sectional area $A_c$ of the threaded zone (19) and of the shear support sleeve (40) surrounding the threaded zone (19), at least in some regions:

$$0.9 \leq (A_c / A_f) \leq 1.2.$$

6. System comprising an expansion anchor according any of the proceeding claims, a substrate (6) and an attachment part (2), in particular a baseplate, attached to the substrate (6) by means of the anchor.

Fig. 1

Fig. 2

Fig. 3

A – A

Fig. 4

B – B

Fig. 5

C – C

# EUROPEAN SEARCH REPORT

**Application Number**

EP 24 19 2822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | DE 94 10 844 U1 (FISCHER ARTUR WERKE GMBH [DE]) 9 November 1995 (1995-11-09) * the whole document * ----- | 1-6 | INV. F16B13/06 |

**TECHNICAL FIELDS SEARCHED (IPC)**

F16B

The present search report has been drawn up for all claims

| Place of search | Date of completion of the search | Examiner |
|---|---|---|
| Munich | 22 January 2025 | Pirog, Pawel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 2822

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2025

| Patent document cited in search report | Publication date | Patent family member(s) | Publication date |
|---|---|---|---|
| DE 9410844 U1 | 09-11-1995 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 9410844 U1